# EUROPÄISCHE PATENTSCHRIFT

(11) **EP 3 360 744 B1**
(45) Veröffentlichungstag und Bekanntmachung des Hinweises auf die Patenterteilung: **05.03.2025**
(21) Anmeldenummer: 18152019.8
(22) Anmeldetag: 17.01.2018
(51) Int. Cl.: B60W 30/045, B60W 30/18, B60W 50/14

(54) **VERFAHREN ZUM BETREIBEN EINES FAHRZEUGS, INSBESONDERE EINES NUTZFAHRZEUGS**
METHOD FOR OPERATING A VEHICLE, IN PARTICULAR A COMMERCIAL VEHICLE
PROCÉDÉ DE FONCTIONNEMENT D'UN VÉHICULE, EN PARTICULIER UN VÉHICULE UTILITAIRE

(30) Priorität: 24.01.2017 DE 102017000591
(43) Veröffentlichungstag der Anmeldung: 15.08.2018
(73) Patentinhaber: MAN Truck & Bus SE, 80995 München (DE)
(72) Erfinder: Grimm, Thomas, 91054 Erlangen (DE)
(74) Vertreter: Liebl, Thomas

(56) Entgegenhaltungen:
- WO-A1-2014/003637
- WO-A2-2014/086644
- DE-A1- 102009 033 752
- DE-A1- 19 648 943
- US-A1- 2010 138 099
- US-A1- 2015 375 756
- US-A1- 2016 018 821

## Beschreibung

Die Erfindung betrifft ein Verfahren zum Betreiben eines Fahrzeugs, insbesondere eines Nutzfahrzeugs, nach Patentanspruch 1, eine Vorrichtung zum Betreiben eines Fahrzeugs, insbesondere eines Nutzfahrzeugs, nach Patentanspruch 9 sowie ein Fahrzeug, insbesondere ein Nutzfahrzeug, zur Durchführung des Verfahrens nach Patentanspruch 10.

Es ist bekannt, an einem Fahrzeug eine Vorrichtung vorzusehen, mittels der der Fahrzeugbetrieb durch Berücksichtigung von in Fahrtrichtung vor dem Fahrzeug befindlichen Veränderungen der Fahrbahnsteigung optimiert werden kann. Der Fahrbetrieb wird dabei zur Verringerung des Kraftstoffverbrauchs bzw. des Energieverbrauchs des Fahrzeugs optimiert.

Beispielsweise ist aus der DE 10 2010 048 323 A1 ein Betriebsverfahren für ein Kraftfahrzeug bekannt, bei dem zunächst wenigstens eine verbrauchsrelevante Straßeneigenschaft einer Straße auf der bevorstehenden Fahrroute des Kraftfahrzeugs ermittelt und anschließend eine Fahrempfehlung in Abhängigkeit von der ermittelten verbrauchsrelevanten Straßeneigenschaft auf der bevorstehenden Fahrroute des Kraftfahrzeugs bestimmt wird. Diese Fahrempfehlung kann dann einem Fahrzeugführer des Fahrzeugs mitgeteilt werden. Konkret wird hier beispielsweise überprüft, ob sich auf der bevorstehenden Fahrroute des Kraftfahrzeugs eine Kuppe befindet, über die das Kraftfahrzeug fahren wird. Befindet sich das Kraftfahrzeug kurz vor einer derartigen Kuppe, wird eine Fahrempfehlung zur Verringerung der Antriebsleistung des Kraftfahrzeugs oder sogar zum antriebslosen Ausrollen des Kraftfahrzeugs ausgegeben. Hat das Fahrzeug die Kuppe passiert und befindet sich das Kraftfahrzeug auf einer Gefällestrecke, wird zudem eine Fahrempfehlung zur Erhöhung der Fahrgeschwindigkeit ausgegeben.

Aus der WO 2014/086644 A2 ist ein Verfahren zum Betreiben einer Rekuperationsbremse eines Kraftfahrzeugs sowie eine Rekuperationsbremse bekannt. Die US 2010/138099 A1 offenbart ein Verfahren zur Erzeugung von Reiseverläufen und ein Gerät zur Erzeugung von Reiseverläufen. aus der US 2016/018821 A1 ist ein Fernsteuerungsgerät und ein Fernsteuerungssystem, das dieses Gerät verwendet, bekannt. Die DE 196 48 943 A1 offenbart eine automatische Fahrsteuerungseinheit für Fahrzeuge. Aus der DE 10 2009 033 752 A1 sind ein Verfahren und eine Vorrichtung zum Schalten verschiedener Funktionen bekannt. Die US 2015/375756 A1 offenbart die Bestimmung eines Risikos von Fahrzeugkollisionen. Aus der WO 2014/003637 A1 sind ein Verfahren und ein System zur Steuerung eines regenerativen Bremssystems in einem Fahrzeug bekannt.

Aufgabe der Erfindung ist es, ein Verfahren zum Betreiben eines Fahrzeugs, insbesondere eines Nutzfahrzeugs, sowie eine Vorrichtung zum Betreiben eines Fahrzeugs, insbesondere eines Nutzfahrzeugs, bereitzustellen, mittels denen der Fahrzeugbetrieb auf einfache und effektive Weise weiter optimiert werden kann.

Diese Aufgabe wird gelöst mit den Merkmalen der unabhängigen Patentansprüche. Bevorzugte Weiterbildungen sind in den Unteransprüchen offenbart.

Gemäß Patentanspruch 1 wird ein Verfahren zum Betreiben eines Fahrzeugs, insbesondere eines Nutzfahrzeugs, vorgeschlagen, wobei das Fahrzeug eine Fahrtinformation-Ermittlungseinrichtung aufweist, mittels der zumindest die aktuelle Position, insbesondere zusammen mit der aktuell eingestellten Fahrroute, des fahrenden Fahrzeugs als aktuelle Fahrtinformation kontinuierlich ermittelt wird. Zudem ist eine Fahrstrategie-Ermittlungseinrichtung vorgesehen, mittels der anhand der ermittelten Fahrtinformationen und anhand von in einer Speichereinrichtung gespeicherten Kartendaten zunächst erfasst wird, ob sich in Fahrtrichtung vor dem Fahrzeug eine, insbesondere einen definierten Kurvenverlauf aufweisende, Kurve befindet. Sofern mittels der Fahrstrategie-Ermittlungseinrichtung eine derartige Kurve erfasst wird, wird mittels der Fahrstrategie-Ermittlungseinrichtung anhand von gespeicherten und/oder ermittelten Kurveninformationen sowie anhand von Fahrzeuginformationen eine optimale, insbesondere eine energieverbrauchsoptimale, Fahrstrategie zum Durchfahren der Kurve ermittelt.

Auf diese Weise kann der Fahrzeugbetrieb weiter optimiert werden, da mit der erfindungsgemäß ermittelten optimalen Fahrstrategie zum Durchfahren einer erfassten, vorausliegenden Kurve nun der Fahrzeugbetrieb auch im Hinblick auf eine Kurven-Durchfahrt optimiert werden kann. Anhand der gespeicherten und/oder ermittelten Kurveninformationen und der Fahrzeuginformationen kann die optimale Fahrstrategie zum Durchfahren der vorausliegenden Kurve dabei einfach und effektiv ermittelt werden.

Die Begrifflichkeit "Durchfahren der Kurve" ist hier dabei ausdrücklich in einem weiten Sinne zu verstehen. So soll die Kurven-Durchfahrt hier auch die Anfahrt auf die Kurve mit umfassen, so dass mittels der Fahrstrategie-Ermittlungseinrichtung auch bezüglich des Anfahrens der Kurve eine optimale Fahrstrategie ermittelt wird.

Des Weiteren sind eine Vielzahl von Fahrstrategien zur Optimierung der Kurven-Durchfahrt denkbar. Sofern eine erfasste vorausliegende Kurve beispielsweise energieverbrauchsoptimal bzw. mit möglichst geringem Energieverbauch durchfahren werden soll, kann mittels der Fahrstrategie beispielsweise eine Reduzierung der Fahrzeuggeschwindigkeit vor dem Erreichen der Kurve vorgegeben werden, um die während der Kurven-Durchfahrt wirkenden Querkräfte zu verringern. Bei einer verschleißoptimierten Fahrstrategie kann beispielsweise der Einsatz von Bremssystemen des Fahrzeugs, insbesondere auch eines Rekuperations-Bremssystems des Fahrzeugs, optimiert werden. Bei einer sicherheitsoptimierten Fahrstrategie kann beispielsweise die Geschwindigkeit, die Entschleunigung und die Beschleunigung des Fahrzeugs vorgegeben werden.

Grundsätzlich kann natürlich zu jeder vorausliegenden Kurve eine Fahrstrategie ermittelt und an das Fahrzeug übermittelt werden. Bevorzugt ist es jedoch, wenn nur zu vorausliegenden Kurven mit einem definierten Kurvenverlauf eine optimale Fahrstrategie zum Durchfahren der Kurve ermittelt wird, um die Effizienz der erfindungsgemäßen Verfahrensführung zu erhöhen. Die optimale Fahrstrategie kann dabei beispielsweise nur für vorausliegende Kurven ermittelt werden, deren Kurvenradius einen definierten Kurvenradius-Wert unterschreitet, so dass die Fahrstrategie nur für engere oder besonders enge Kurven ermittelt wird.

Bei einer nicht von der Erfindung umfassten Vergleichsform der Verfahrensführung wird die optimale Fahrstrategie anhand von in der fahrzeugseitigen Speichereinrichtungen gespeicherten kartenbasierten Kurvendaten als Kurveninformationen mittels der fahrzeugseitigen, insbesondere durch ein Steuergerät des Fahrzeugs gebildeten, Fahrstrategie-Ermittlungseinrichtung ermittelt. Auf diese Weise kann die optimale Fahrstrategie zur Kurven-Durchfahrt effektiv ermittelt werden. Die kartenbasierten Kurvendaten können dabei beispielsweise durch den Kurvenradius der erfassten vorausliegenden Kurve oder durch eine vorgeschriebene Geschwindigkeitsbegrenzung für eine Durchfahrt der erfassten Kurve gebildet sein. Zudem können die kartenbasierten Kurvendaten beispielsweise auch durch den Kurvenverlauf, durch die Änderung des Kurvenradius entlang der Kurve, durch die Länge der Kurve oder durch die Breite bzw. den Breitenverlauf der Fahrbahn bzw. der Fahrspur des Fahrzeugs gebildet sein.

Erfindungsgemäß wird die optimale Fahrstrategie anhand von in der fahrzeugseitigen Speichereinrichtung gespeicherten Erfahrungsdaten zur Durchfahrt wenigstens einer Kurve, insbesondere der erfassten Kurve und/oder wenigstens einer Kurve mit einem identischen oder ähnlichen Kurvenerlauf, mit dem Fahrzeug als Kurveninformation mittels der fahrzeugseitigen, insbesondere durch ein Steuergerät des Fahrzeugs gebildeten, Fahrstrategie-Ermittlungseinrichtung ermittelt. So kann die optimale Fahrstrategie auf besonders einfache und gleichzeitig auch effektive Weise ermittelt werden.

Bevorzugt werden dabei während der Durchfahrt der erfassten Kurve mittels einer Zustand-Ermittlungseinrichtung des Fahrzeugs aktuelle Fahrzeug-Zustandsdaten ermittelt. Diese ermittelten aktuellen Fahrzeug-Zustandsdaten werden dann als Erfahrungsdaten in der fahrzeugseitigen Speichereinrichtung abgespeichert. So wird die Effektivität der erfindungsgemäßen Verfahrensführung weiter erhöht, da die in der fahrzeugseitigen Speichereinrichtung als neue Erfahrungsdaten abgespeicherten Fahrzeug-Zustandsdaten bei einer erneuten Durchfahrt der Kurve oder einer Kurve mit einem identischen oder ähnlichen Kurvenverlauf mit dem Fahrzeug bei der Ermittlung einer optimalen Fahrstrategie zum Durchfahren der Kurve verwendet werden können. Mit der Menge an in der Speichereinrichtung gespeicherten Erfahrungsdaten steigt daher auch die Effektivität der Ermittlung optimaler Fahrstrategien für Kurven-Durchfahrten.

Vorzugsweise sind diese ermittelten aktuellen Fahrzeug-Zustandsdaten durch den Geschwindigkeitsverlauf des Fahrzeugs während der Kurven-Durchfahrt und/oder durch den wenigstens einen gewählten Gang eines Fahrzeuggetriebes während der Kurven-Durchfahrt und/oder durch den Beschleunigungsverlauf (positive und negative Beschleunigung) des Fahrzeugs während der Kurven-Durchfahrt und/oder durch den Energieverbrauch des Fahrzeugs, insbesondere durch den Kraftstoffverbrauch des Fahrzeugs, während der Kurven-Durchfahrt gebildet. Diese Fahrzeug-Zustandsdaten stellen besonders wertvolle bzw. nützliche Erfahrungsdaten zur Ermittlung einer optimalen Fahrstrategie beim erneuten Durchfahren der Kurve oder bei einer Durchfahrt einer Kurve mit einem ähnlichen oder identischen Kurvenverlauf dar.

Alternativ zur Ermittlung der optimalen Fahrroute mit Hilfe von in einer fahrzeugseitigen Speichereinrichtung gespeicherten Daten kann bei einer nicht von der Erfindung umfassten Vergleichsform die Fahrstrategie-Ermittlungseinrichtung auch durch eine datenübertragend mit dem Fahrzeug verbundene, fahrzeugexterne Auswertestation, insbesondere durch einen fahrzeugexternen Cloud-Server, gebildet sein. Die optimale Fahrstrategie wird dann anhand von in einer Speichereinrichtung der Auswertestation gespeicherten Daten als Kurveninformationen mittels der Fahrstrategie-Ermittlungseinrichtung ermittelt. So können besonders effektive Fahrstrategien ermittelt werden, da mittels der fahrzeugexternen Auswertestation eine besonders große Menge an Kurveninformationen abgespeichert und gleichzeitig auch schnell bezüglich einer optimalen Kurven-Durchfahrt ausgewertet werden können. Die in der Speichereinrichtung gespeicherten Kurveninformationen können dabei ebenfalls durch kartenbasierte Kurvendaten oder durch Erfahrungsdaten zur Durchfahrt wenigstens einer Kurve, insbesondere der erfassten und/oder wenigstens einer Kurve mit einem identischen oder ähnlichen Kurvenverlauf, mit dem Fahrzeug gebildet sein. Die Verwendung einer derartigen Auswertestation hat zudem auch den Vorteil, dass eine einzige Auswertestation von einer Vielzahl von Fahrzeugen genutzt werden kann, um optimale Fahrstrategien für Kurven-Durchfahrten zu ermitteln. Dabei müssen an den Fahrzeugen keine bzw. nur geringfügige Modifikationen vorgenommen werden, um deren Kurven-Durchfahrt zu optimieren. Die Fahrzeuge können dabei beispielsweise über eine UMTS-Datenverbindung mit der Auswertestation kommunizieren.

Erfindungsgemäß wird wenigstens eine Antriebskomponente des Fahrzeugs zum Einhalten der ermittelten, bevorzugt optimalen, Fahrstrategie selbsttätig bzw. automatisch mittels eines Steuergeräts des Fahrzeugs angesteuert. So wird komfortabel und zuverlässig sichergestellt, dass das Fahrzeug gemäß der ermittelten Fahrstrategie betrieben wird. Erfindungsgemäß ist vorgesehen, dass die wenigstens eine Antriebskomponente durch eine Brennkraftmaschine des Fahrzeugs und/oder durch ein Fahrzeuggetriebe und/oder durch eine Elektromaschine des Fahrzeugs gebildet ist. Dabei kann beispielsweise bei einer energieverbrauchsoptimalen Fahrstrategie die Abschaltung von Teilen des Antriebsstrangs bei einem Bremsen oder Ausrollen des Fahrzeugs, die Betriebsweise der Brennkraftmaschine oder das Schaltverhalten des Fahrzeuggetriebes, insbesondere bei einer Fahrzeugbeschleunigung, optimiert werden.

Alternativ oder zusätzlich kann auch wenigstens ein Bremssystem des Fahrzeugs zum Einhalten der ermittelten optimalen Fahrstrategie selbsttätig bzw. automatisch mittels eines Steuergeräts des Fahrzeugs angesteuert werden. So kann ebenfalls komfortabel und zuverlässig sichergestellt werden, dass das Fahrzeug gemäß der ermittelten Fahrstrategie betrieben wird. Bevorzugt ist dabei vorgesehen, dass das wenigstens eine Bremssystem zumindest durch ein Rekuperations-Bremssystem des Fahrzeugs gebildet ist.

Vorteilhaft ist es weiter, wenn das Fahrzeug eine durch einen Fahrer des Fahrzeugs betätigbare Betätigungseinrichtung, insbesondere einen Taster und/oder einen Schalter, aufweist, mittels der die selbsttätige bzw. automatische Ansteuerung der wenigstens einen Antriebskomponente und/oder des wenigstens einen Bremssystems deaktiviert insbesondere deaktiviert und aktiviert, werden kann. Mittels einer derartigen Betätigungseinrichtung kann der Fahrer die selbsttätige Ansteuerung der wenigstens einen Antriebskomponente bzw. des wenigstens einen Bremssystems auf einfache Weise deaktivieren, wenn er eine derartige Ansteuerung nicht wünscht bzw. nicht für erforderlich hält.

Weiter bevorzugt wird die an das Fahrzeug übermittelte Fahrstrategie einem Fahrer des Fahrzeugs mittels einer Anzeigeeinrichtung, insbesondere mit einem Bildschirm, angezeigt. So kann der Fahrer effektiv über die ermittelte Fahrstrategie informiert werden. Gegebenenfalls kann mittels einer derartigen Anzeige auch der Fahrer selbst das Fahrzeug zum Einhalten der angezeigten Fahrstrategie steuern.

Vorzugsweise sind die bei der Ermittlung der optimalen Fahrstrategie verwendeten Fahrzeuginformationen durch aktuelle Fahrzeug-Zustandsdaten gebildet, die mittels einer Zustand-Ermittlungseinrichtung des Fahrzeugs ermittelt werden. Bevorzugt ist dabei vorgesehen, dass die ermittelten aktuellen Fahrzeug-Zustandsdaten durch die aktuelle Geschwindigkeit des Fahrzeugs und/oder durch den aktuell gewählten Gang eines Fahrzeuggetriebes und/oder durch die aktuell mittels einer Energie-Speichereinrichtung des Fahrzeugs gespeicherte elektrische Energiemenge und/oder durch die in einem Kraftstofftank des Fahrzeugs gespeicherte Kraftstoffmenge gebildet wird. Mittels dieser aktuellen Fahrzeug-Zustandsdaten kann die optimale Fahrstrategie zum Durchfahren einer erfassten vorausliegenden Kurve auf effektive Weise ermittelt werden.

Weiter bevorzugt sind die zur Ermittlung der optimalen Fahrstrategie ermittelten Fahrzeuginformationen durch die Fahrzeugart bzw. den Fahrzeugtyp und/oder durch den aktuellen Beladungszustands des Fahrzeugs und/oder durch die Motorisierung des Fahrzeugs gebildet. Mittels dieser Fahrzeuginformationen kann die optimale Fahrstrategie zum Durchfahren einer erfassten, vorausliegenden Kurve effektiv ermittelt werden.

Vorteilhaft ist es zudem, wenn die Fahrstrategie-Ermittlungseinrichtung als KI (Künstliche Intelligenz) basierendes System ausgebildet. Über ein derartiges KI basierendes System kann die optimale Fahrstrategie besonders effektiv ermittelt werden.

Zur Lösung der bereits genannten Aufgabe wird ferner eine Vorrichtung zum Betreiben eines Fahrzeugs, insbesondere eines Nutzfahrzeugs, beansprucht, wobei das Fahrzeug eine Fahrtinformation-Ermittlungseinrichtung aufweist, mittels der zumindest die aktuelle Position, insbesondere zusammen mit der aktuell eingestellten Fahrroute, des fahrenden Fahrzeugs als aktuelle Fahrtinformation kontinuierlich ermittelt werden kann. Zudem ist eine Fahrstrategie-Ermittlungseinrichtung vorgesehen, mittels der anhand der ermittelten Fahrtinformationen und anhand von in einer Speichereinrichtung gespeicherten Kartendaten erfasst werden kann, ob sich in Fahrtrichtung vor dem Fahrzeug eine, insbesondere einen definierten Kurvenverlauf aufweisende, Kurve befindet. Sofern mittels der Fahrstrategie-Ermittlungseinrichtung eine Kurve erfasst wird, kann mittels der Fahrstrategie-Ermittlungseinrichtung zudem anhand von gespeicherten und/oder ermittelten Kurveninformationen sowie anhand von Fahrzeuginformationen eine optimale, insbesondere eine energieverbrauchsoptimale, Fahrstrategie zum Durchfahren der Kurve ermittelt werden, wobei wenigstens eine Fahrzeugkomponente des Fahrzeugs zum Einhalten der ermittelten Fahrstrategie mittels eines Steuergeräts des Fahrzeugs angesteuert wird, und wobei wenigstens eine Antriebskomponente des Fahrzeugs zum Einhalten der ermittelten optimalen Fahrstrategie selbsttätig mittels eines Steuergeräts des Fahrzeugs angesteuert wird, wobei vorgesehen ist, dass die wenigstens eine Antriebskomponente durch eine Brennkraftmaschine des Fahrzeugs und/oder durch ein Fahrzeuggetriebe und/oder durch eine Elektromaschine des Fahrzeugs gebildet ist. Erfindungsgemäß ist vorgesehen, dass die optimale Fahrstrategie anhand von in der fahrzeugseitigen Speichereinrichtung gespeicherten Erfahrungsdaten zur Durchfahrt wenigstens einer Kurve, insbesondere der erfassten Kurve und/oder wenigstens einer Kurve mit einem identischen oder ähnlichen Kurvenverlauf, mit dem Fahrzeug als Kurveninformationen mittels der fahrzeugseitigen, insbesondere durch ein Steuergerät des Fahrzeugs gebildeten, Fahrstrategie-Ermittlungseinrichtung ermittelt wird.

Des Weiteren wird auch ein Fahrzeug, insbesondere ein Nutzfahrzeug, zur Durchführung des erfindungsgemäßen Verfahrens beansprucht.

Die sich durch die erfindungsgemäße Vorrichtung und das erfindungsgemäße Fahrzeug ergebenden Vorteile sind identisch mit den bereits gewürdigten Vorteilen der erfindungsgemäßen Verfahrensführung, so dass diese an dieser Stelle nicht wiederholt werden.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Figur 1: eine schematische Darstellung, anhand der die erfindungsgemäße Verfahrensführung erläutert wird;
- Figur 2: eine schematische Darstellung, aus der der Aufbau einer erfindungsgemäßen Vorrichtung hervorgeht;
- Figur 3: ein Ablaufdiagramm, anhand dem die erfindungsgemäße Verfahrensführung erläutert wird; und
- Figur 4: in einer Darstellung gemäß Figur 2 eine zweite Ausführungsform der erfindungsgemäßen Vorrichtung.

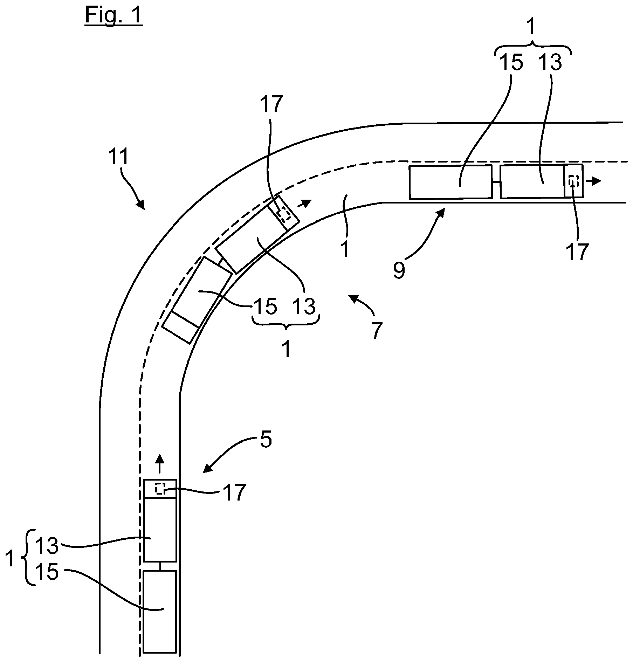

In Figur 1 ist ein auf einer Fahrbahn 1 fahrendes Fahrzeug 3 in drei Fahrsituationen 5, 7, 9 gezeigt. In einer ersten Fahrsituation 5 befindet sich das Fahrzeug 1 dabei, in Fahrtrichtung gesehen, unmittelbar vor einer Kurve 11 der Fahrbahn 1. In einer zeitlich späteren zweiten Fahrsituation 7 befindet sich das Fahrzeug inmitten der Kurve 11, so dass die Kurve 11 hier von dem Fahrzeug 1 durchfahren wird. In einer zeitlich noch späteren dritten Fahrsituation 9 hat das Fahrzeug 1 die Kurve 11 durchfahren, so dass sich die Kurve 11 hier in Fahrtrichtung hinter dem Fahrzeug 1 befindet. Das Fahrzeug ist hier beispielhaft durch eine Zugkombination gebildet, die sich aus einem Zugfahrzeug 13 und einem mit dem Zugfahrzeug 13 gekoppelten Anhänger 15 zusammensetzt. Zudem weist das Fahrzeug 1 eine in Fig. 1 mit gestrichelten Linien angedeutete erfindungsgemäße Vorrichtung 17 zum Betreiben des Fahrzeugs 1 auf.

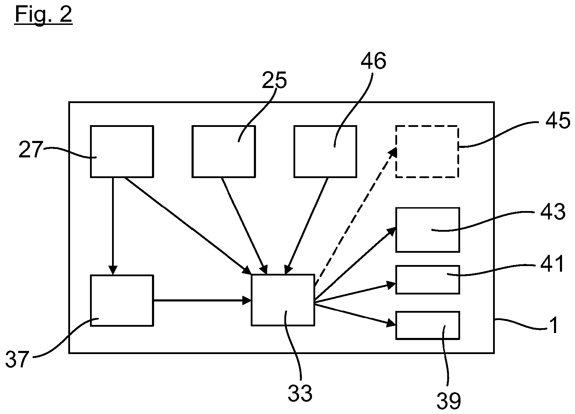

Der Aufbau dieser Vorrichtung 17 wird nachfolgend anhand von Figur 2 näher erläutert:
Wie in Figur 2 schematisch gezeigt ist, weist das Fahrzeug 1 eine Fahrtinformation-Ermittlungseinrichtung 25 auf, mittels der die aktuelle Position und die aktuelle Fahrroute des Fahrzeugs 1 als Fahrtinformationen kontinuierlich bzw. fortlaufend neu ermittelt. Zudem weist das Fahrzeug auch eine Zustand-Ermittlungseinrichtung 27 auf, mittels der der aktuelle Zustand des Fahrzeugs ebenfalls kontinuierlich bzw. fortlaufend neu ermittelt wird. Konkret werden hier dabei die aktuelle Geschwindigkeit des Fahrzeugs 1, der aktuell gewählte Gang eines Fahrzeuggetriebes und die in einem Kraftstofftank des Fahrzeugs 1 gespeicherte Kraftstoffmenge als Fahrzeug-Zustandsdaten kontinuierlich mittels der Zustand-Ermittlungseinrichtung 27 ermittelt. Die Ermittlung der aktuellen Fahrtinformationen und der aktuellen Fahrzeug-Zustandsdaten kann beispielsweise bei einem Start des Fahrzeugs 1 automatisch aktiviert werden.

Weiter sind die Fahrtinformationen-Ermittlungseinrichtung 25 und die Zustands-Ermittlungseinrichtung 27 des Fahrzeugs 1 datenübertragend mit einem Steuergerät 33 des Fahrzeugs 1 verbunden, so dass die ermittelten aktuellen Fahrtinformationen und die ermittelten Fahrzeug-Zustandsdaten als Fahrzeuginformation an das Steuergerät 33 des Fahrzeugs 1 übermittelt werden. In dem Steuergerät 33 sind hier zudem auch Fahrzeuginformationen gespeichert. Diese gespeicherten Fahrzeuginformationen sind hier beispielhaft durch die Fahrzeugart, durch den aktuellen Beladungszustand des Fahrzeugs 1 und durch die Motorisierung des Fahrzeugs 1 gebildet. Des Weiteren ist das Steuergerät 33 auch datenübertragend mit einer Speichereinrichtung 37 des Fahrzeugs 1 verbunden, in der Kartendaten bzw. Straßendaten gespeichert sind.

Das Steuergerät 33 bildet hier eine Fahrstrategie-Ermittlungseinrichtung aus, mittels der anhand der mittels der Fahrtinformationen-Ermittlungseinrichtung 25 ermittelten aktuellen Fahrtinformationen des Fahrzeugs 1 sowie anhand der in der Speichereinrichtung 37 gespeicherten Straßendaten kontinuierlich bzw. fortlaufend ermittelt wird, ob sich in Fahrtrichtung unmittelbar vor dem Fahrzeug 1 eine Kurve mit einem definierten Kurvenverlauf befindet. Wird mittels der Fahrstrategie-Ermittlungseinrichtung 33 eine derartige Kurve ermittelt bzw. erfasst, ermittelt die Fahrstrategie-Ermittlungseinrichtung 33 anhand von in der Speichereinrichtung 37 gespeicherten Kurveninformationen, anhand der ermittelten aktuellen Fahrzeug-Zustandsdaten und der im Steuergerät 33 gespeicherten Fahrzeuginformationen eine optimale, insbesondere eine energieverbrauchsoptimale, Fahrstrategie zum Durchfahren der Kurve. Bei dem in Figur 1 gezeigten Fahrbahnverlauf erfolgt die Ermittlung der optimalen Fahrstrategie dabei in der ersten Fahrsituation 5 des Fahrzeugs 1 vor der Kurve 11.

Die für die Ermittlung der optimalen Fahrstrategie verwendeten Kurveninformationen sind hier beispielhaft durch in der Speichereinrichtung 37 gespeicherte kartenbasierte Kurvendaten, beispielsweise durch den Kurvenradius der erfassten Kurve, gebildet. Zudem sind die in der Speichereinrichtung 37 gespeicherten Kurveninformationen hier beispielhaft auch durch gespeicherte Erfahrungsdaten zur Durchfahrt wenigstens einer Kurve, insbesondere der erfassten Kurve und/oder wenigstens einer Kurve mit einem identischen oder einem ähnlichen Kurvenverlauf, mit dem Fahrzeug 1 gebildet.

Nach Ermittlung der optimalen Fahrstrategie zum Durchfahren der erfassten vorausliegenden Kurve werden hier beispielhaft mittels des Steuergeräts 33 eine Brennkraftmaschine 39, eine Getriebe 41 sowie ein Rekuperations-Bremssystems 43 des Fahrzeugs 1 angesteuert, dergestalt, dass das Fahrzeug die ermittelte optimale Fahrstrategie zum Durchfahren der vorausliegenden Kurve einhält. Optional kann mit dem Steuergerät 33 zusätzlich auch ein mit gestrichelten Linien angedeuteter Bildschirm 45 des Fahrzeugs angesteuert werden, so dass einem Fahrer des Fahrzeugs 1 die ermittelte Fahrstrategie mit dem Bildschirm 45 angezeigt wird.

Des Weiteren weist das Fahrzeug hier beispielhaft auch eine durch den Fahrer des Fahrzeugs 1 betätigbare Betätigungseinrichtung 46, beispielsweise eine Taste und/oder einen Schalter, auf, mittels der die selbsttätige bzw. automatische Ansteuerung der Brennkraftmaschine 39, des Getriebes 41 und des Rekuperations-Bremssystems 43 des Fahrzeugs 1 deaktiviert und aktiviert werden kann.

Nach der Kurven-Durchfahrt werden hier dann während der Kurven-Durchfahrt mittels der Zustand-Ermittlungseinrichtung 27 ermittelte Fahrzeug-Zustandsdaten als Erfahrungsdaten in der datenübertragend mit der Zustand-Ermittlungseinrichtung 27 verbundenen Speichereinrichtung 37 des Fahrzeugs 1 abgespeichert. Diese zu speichernden Fahrzeug-Zustandsdaten sind hier beispielhaft durch den Geschwindigkeitsverlauf des Fahrzeugs 1 während der Kurven-Durchfahrt, durch den wenigstens einen direkten Gang des Fahrzeuggetriebes 41 während der Kurven-Durchfahrt, durch den Beschleunigungsverlauf des Fahrzeugs 1 während der Kurven-Durchfahrt und durch den Kraftstoffverbrauch des Fahrzeugs 1 während der Kurven-Durchfahrt gebildet. Bei dem in Figur 1 gezeigten Fahrbahnverlauf erfolgt die Abspeicherung dieser während der Kurvenfahrt ermittelten Fahrzeug-Zustandsdaten in der dritten Fahrsituation 9 des Fahrzeugs 1.

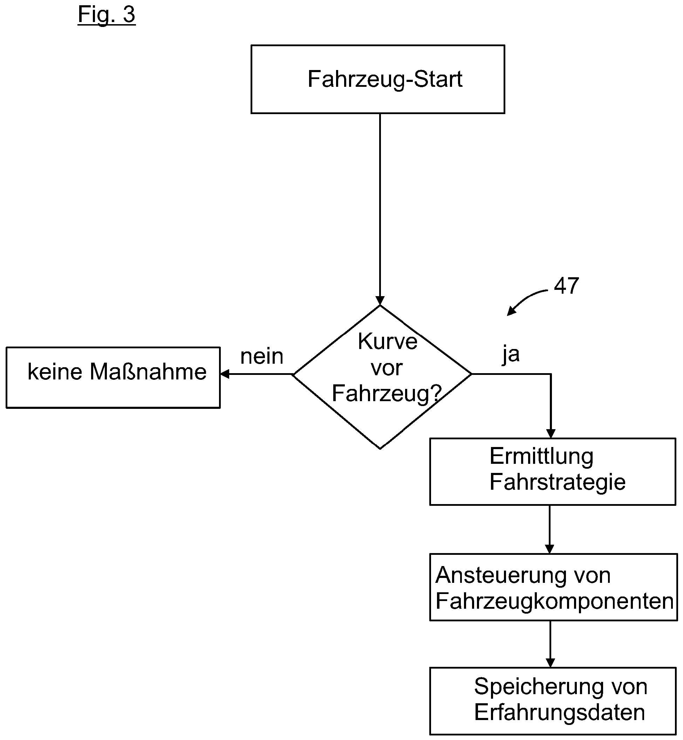

In Figur 3 ist ein Ablaufdiagramm gezeigt, anhand dem die erfindungsgemäße Verfahrensführung nochmals zusammengefasst erläutert wird:
Nach dem Start des Fahrzeugs 1 werden die aktuellen Fahrtinformationen und die aktuellen Fahrzeug-Zustandsdaten als Fahrzeuginformationen kontinuierlich mittels der Fahrtinformationen-Ermittlungseinrichtung 25 und der Zustands-Ermittlungseinrichtung 27 ermittelt und an das Steuergerät 33 des Fahrzeugs 1 weitergeleitet. Mittels des Steuergerätes 33 wird dann gemäß der Entscheidungsraute 47 kontinuierlich ermittelt, ob sich in Fahrtrichtung vor dem Fahrzeug eine Kurve mit einem definierten Kurvenverlauf befindet. Befindet sich vor dem Fahrzeug 1 eine derartige Kurve, wird eine optimale Fahrstrategie zum Durchfahren dieser Kurve ermittelt. Anschließend werden dann mittels des Steuergeräts 33 Fahrzeugkomponenten, hier die Brennkraftmaschine 39, das Getriebe 41 und das Rekuperations-Bremssystem 43 des Fahrzeugs 1, zum Einhalten der ermittelten Fahrstrategie angesteuert. Nach Durchfahrt der Kurve werden die während der Kurven-Durchfahrt ermittelten Fahrzeug-Zustandsdaten dann an die Speichereinrichtung 37 übermittelt und dort als Erfahrungsdaten abgespeichert.

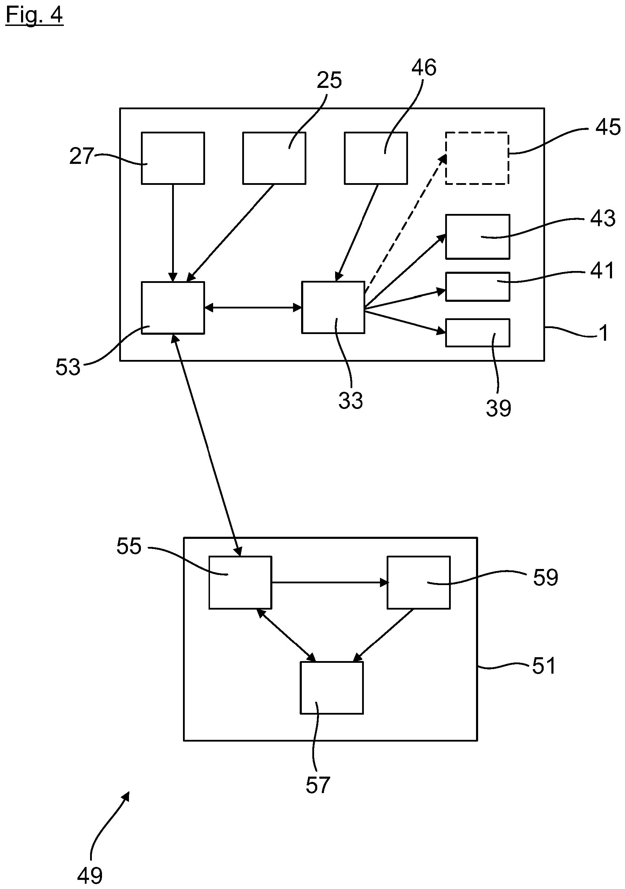

In Figur 4 ist eine zweite Ausführungsform einer erfindungsgemäßen Vorrichtung bzw. eines erfindungsgemäßen Systems 49 gezeigt. Im Vergleich zu der in Figur 2 gezeigten Vorrichtung 17 weist diese Vorrichtung 49 eine schematisch angedeutete, datenübertragend mit dem Fahrzeug 1 verbundene Auswertestation 51 auf. Diese Auswertestation 51 kann beispielsweise durch einen Cloud-Server gebildet sein.

Konkret weist das Fahrzeug 1 hier eine datenübertragend mit der Fahrtinformation-Ermittlungseinrichtung 25 und der Zustand-Ermittlungseinrichtung 27 des Fahrzeugs 1 verbundene Sende- und Empfangseinrichtung 53 auf. Mittels dieser Sende- und Empfangseinrichtung 53 werden mittels der Fahrtinformationen-Ermittlungseinrichtung 25 ermittelten aktuellen Fahrtinformationen und die mittels der Zustands-Ermittlungseinrichtung 27 ermittelten aktuellen Fahrzeug-Zustandsdaten kontinuierlich bzw. fortlaufend an eine datenübertragend mit der fahrzeugseitigen Sende- und Empfangseinrichtung 53 verbundene Sende- und Empfangseinrichtung 55 der Auswertestation 51 übermittelt. Diese Übermittlung der aktuellen Fahrtinformationen und der aktuellen Fahrzeug-Zustandsdaten als Fahrzeuginformationen an die Auswertestation 51 kann beispielsweise bei einer Aktivierung eines Geschwindigkeits-Regelsystems bzw. eines Tempomats des Fahrzeugs 1 durch einen Fahrer des Fahrzeugs 1 aktiviert werden. Zudem werden die in dem Steuergerät 33 des Fahrzeugs 1 gespeicherten Fahrzeuginformationen, beispielsweise der Fahrzeugtyp, ebenfalls mittels der fahrzeugseitigen Sende- und Empfangseinrichtung 53 an die Auswertestation 51 übermittelt. Die Übermittlung dieser gespeicherten Fahrzeuginformationen kann ebenfalls bei einer Aktivierung eines Tempomats des Fahrzeugs 1 aktiviert werden.

Wie aus Figur 2 weiter hervorgeht, weist die Auswertestation 51 eine datenübertragend mit der Sende- und Empfangseinrichtung 55 verbundene Fahrstrategie-Ermittlungseinrichtung 57 auf, mittels der die optimale Fahrstrategie zum Durchfahren der erfassten vorausliegenden Kurve ermittelt wird. Somit ist die Fahrstrategie-Ermittlungseinrichtung hier nicht durch das Steuergerät 33 des Fahrzeugs 1, sondern durch die fahrzeugexterne Auswertestation 51 gebildet. Die Fahrstrategie-Ermittlungseinrichtung 57 ist datenübertragend mit einer Speichereinrichtung 59 der Auswertestation 51 verbunden, in der hier Kartendaten bzw. Straßendaten gespeichert sind. Anhand der an die Auswertestation 51 übermittelten Fahrtinformationen und Fahrzeuginformationen sowie anhand der in der Speichereinrichtung 59 gespeicherten Straßendaten ermittelt die Fahrstrategie-Ermittlungseinrichtung 57 hier ebenfalls kontinuierlich bzw. fortlaufend, ob sich in Fahrtrichtung unmittelbar vor dem Fahrzeug eine Kurve mit einem definierten Kurvenverlauf befindet. Wird mittels der Fahrstrategie-Ermittlungseinrichtung 57 eine derartige Kurve ermittelt bzw. erfasst, ermittelt die Fahrstrategie-Ermittlungseinrichtung 57 anhand von in der Speichereinrichtung 59 gespeicherten Kurveninformationen, hier beispielhaft ebenfalls kartenbasierte Kurvendaten und Erfahrungsdaten, sowie anhand der übermittelten Fahrzeuginformationen des Fahrzeugs 1 eine optimale Fahrstrategie zum Durchfahren der erfassten Kurve.

Die ermittelte Fahrstrategie wird dann noch vor dem Durchfahren der Kurve mittels der Sende- und Empfangseinrichtung 55 an das Fahrzeug 1 übermittelt und an das Steuergerät 33 des Fahrzeugs 1 weitergeleitet. Anschließend werden mittels des Steuergeräts 33 Fahrzeugkomponenten, hier die Brennkraftmaschine 39, das Getriebe 41 und das Rekuperations-Bremssystem 43 des Fahrzeugs 1, zum Einhalten der ermittelten Fahrstrategie angesteuert. Nach Durchfahrt der Kurve werden die während der Kurven-Durchfahrt ermittelten Fahrzeug-Zustandsdaten an die Auswertestation 51 übermittelt und dort als Erfahrungsdaten in der Speichereinrichtung 59 abgespeichert.

### Bezugszeichenliste

- 1: Fahrzeug
- 3: Fahrbahn
- 5: erste Fahrsituation
- 7: zweite Fahrsituation
- 9: dritte Fahrsituation
- 11: Kurve
- 13: Zugfahrzeug
- 15: Anhänger
- 17: Vorrichtung
- 25: Fahrtinformation-Ermittlungseinrichtung
- 27: Zustand-Ermittlungseinrichtung
- 33: Steuergerät
- 37: Speichereinrichtung
- 39: Brennkraftmaschine
- 41: Getriebe
- 43: Rekuperations-Bremssystem
- 45: Bildschirm
- 46: Betätigungseinrichtung
- 47: Entscheidungsraute
- 49: Vorrichtung
- 51: Auswertestation
- 53: Sende- und Empfangseinrichtung
- 55: Sende- und Empfangseinrichtung
- 57: Fahrstrategie-Ermittlungseinrichtung
- 59: Speichereinrichtung

## Patentansprüche

1. Verfahren zum Betreiben eines Fahrzeugs, wobei das Fahrzeug (1) eine Fahrtinformation-Ermittlungseinrichtung (25) aufweist, mittels der zumindest die aktuelle Position des fahrenden Fahrzeugs (1) als aktuelle Fahrtinformation kontinuierlich ermittelt wird,
wobei eine Fahrstrategie-Ermittlungseinrichtung (33; 57) vorgesehen ist, mittels der anhand der Fahrtinformationen und anhand von in einer Speichereinrichtung (37; 59) gespeicherten Kartendaten zunächst erfasst wird, ob sich in Fahrtrichtung vor dem Fahrzeug (1) eine Kurve (11) befindet,
wobei, sofern mittels der Fahrstrategie-Ermittlungseinrichtung (33; 57) eine Kurve (11) erfasst wird, mittels der Fahrstrategie-Ermittlungseinrichtung (33; 57) anhand von gespeicherten und/oder ermittelten Kurveninformationen sowie anhand von Fahrzeuginformationen eine optimale Fahrstrategie zum Durchfahren der Kurve (11) ermittelt wird, wobei wenigstens eine Fahrzeugkomponente (39, 41, 43) des Fahrzeugs zum Einhalten der ermittelten Fahrstrategie mittels eines Steuergeräts (33) des Fahrzeugs angesteuert wird, und wobei wenigstens eine Antriebskomponente des Fahrzeugs (1) zum Einhalten der ermittelten optimalen Fahrstrategie selbsttätig mittels eines Steuergeräts (33) des Fahrzeugs (1) angesteuert wird, wobei vorgesehen ist, dass die wenigstens eine Antriebskomponente durch eine Brennkraftmaschine (39) des Fahrzeugs (1) und/oder durch ein Fahrzeuggetriebe (41) und/oder durch eine Elektromaschine des Fahrzeugs (1) gebildet ist,
**dadurch gekennzeichnet,**
**dass** die optimale Fahrstrategie anhand von in der fahrzeugseitigen Speichereinrichtung (37) gespeicherten Erfahrungsdaten zur Durchfahrt wenigstens einer Kurve, insbesondere der erfassten Kurve und/oder wenigstens einer Kurve mit einem identischen oder ähnlichen Kurvenverlauf, mit dem Fahrzeug (1) als Kurveninformationen mittels der fahrzeugseitigen, insbesondere durch ein Steuergerät des Fahrzeugs gebildeten, Fahrstrategie-Ermittlungseinrichtung (33) ermittelt wird.

2. Verfahren nach Anspruch 1, **dadurch gekennzeichnet, dass** während der Durchfahrt der erfassten Kurve (11) mittels einer Zustand-Ermittlungseinrichtung (27) des Fahrzeugs (1) aktuelle Fahrzeug-Zustandsdaten ermittelt werden, und dass die ermittelten aktuellen Fahrzeug-Zustandsdaten als Erfahrungsdaten in der fahrzeugseitigen Speichereinrichtung (37) abgespeichert werden.

3. Verfahren nach Anspruch 2, **dadurch gekennzeichnet, dass** die Fahrzeug-Zustandsdaten durch den Geschwindigkeitsverlauf des Fahrzeugs (1) und/oder durch den wenigstens einen gewählten Gang eines Fahrzeuggetriebes (41) und/oder durch den Beschleunigungsverlauf des Fahrzeugs (1) und/oder durch den Energieverbrauch des Fahrzeugs (1), insbesondere durch den Kraftstoffverbrauch des Fahrzeugs (1), während der Kurven-Durchfahrt gebildet sind.

4. Verfahren nach einem der vorhergehenden Ansprüche, **dadurch gekennzeichnet, dass** wenigstens ein Bremssystem des Fahrzeugs (1) zum Einhalten der ermittelten optimalen Fahrstrategie selbsttätig mittels eines Steuergeräts (33) des Fahrzeugs (1) angesteuert wird, wobei bevorzugt vorgesehen ist, dass das wenigstens eine Bremssystem durch ein Rekuperations-Bremssystem (43) des Fahrzeugs (1) gebildet ist.

5. Verfahren nach einem der vorhergehenden Ansprüche, **dadurch gekennzeichnet, dass** das Fahrzeug (1) eine durch einen Fahrer des Fahrzeugs betätigbare Betätigungseinrichtung (46), insbesondere eine Taste und/oder einen Schalter, aufweist, mittels der die selbsttätige Ansteuerung der wenigstens einen Antriebskomponente und/oder des wenigstens einen Bremssystems deaktivierbar, insbesondere deaktivierbar und aktivierbar, ist.

6. Verfahren nach einem der vorhergehenden Ansprüche, **dadurch gekennzeichnet, dass** die ermittelte optimale Fahrstrategie einem Fahrer des Fahrzeugs (1) mittels einer Anzeigeeinrichtung (45), insbesondere mit einem Bildschirm, angezeigt wird.

7. Verfahren nach einem der vorhergehenden Ansprüche, **dadurch gekennzeichnet, dass** die Fahrzeuginformationen durch aktuelle Fahrzeug-Zustandsdaten gebildet sind, die mittels einer Zustand-Ermittlungseinrichtung (27) des Fahrzeugs ermittelt werden, wobei bevorzugt vorgesehen ist, dass die ermittelten aktuellen Fahrzeug-Zustandsdaten durch die aktuelle Geschwindigkeit des Fahrzeugs (1) und/oder den aktuell gewählten Gang eines Fahrzeuggetriebes (41) und/oder durch die aktuell mittels einer Energie-Speichereinrichtung des Fahrzeug (1) gespeicherte elektrische Energiemenge und/oder durch die in einem Kraftstofftank des Fahrzeugs (1) gespeicherte Kraftstoffmenge gebildet sind.

8. Verfahren nach einem der vorhergehenden Ansprüche, **dadurch gekennzeichnet, dass** die Fahrzeuginformationen durch die Fahrzeugart und/oder durch den aktuellen Beladungszustand des Fahrzeugs (1) und/oder durch die Motorisierung des Fahrzeugs (1) gebildet sind.

9. Vorrichtung zum Betreiben eines Fahrzeugs zur Durchführung eines Verfahrens nach einem der vorhergehenden Ansprüche, wobei das Fahrzeug (1) eine Fahrtinformation-Ermittlungseinrichtung (25) aufweist, mittels der zumindest die aktuelle Position des fahrenden Fahrzeugs (1) als aktuelle Fahrtinformation kontinuierlich ermittelbar ist,
wobei eine Fahrstrategie-Ermittlungseinrichtung (33; 57) vorgesehen ist, mittels der anhand der Fahrtinformationen und anhand von in einer Speichereinrichtung (37; 59) gespeicherten Kartendaten erfassbar ist, ob sich in Fahrtrichtung vor dem Fahrzeug (1) eine Kurve (11) befindet,
wobei, sofern mittels der Fahrstrategie-Ermittlungseinrichtung (33; 57) eine Kurve (11) erfasst wird, mittels der Fahrstrategie-Ermittlungseinrichtung (33; 57) anhand von gespeicherten und/oder ermittelten Kurveninformationen sowie anhand von Fahrzeuginformationen eine optimale Fahrstrategie zum Durchfahren der Kurve (11) ermittelbar ist, und wobei wenigstens eine Fahrzeugkomponente (39, 41, 43) des Fahrzeugs zum Einhalten der ermittelten Fahrstrategie mittels eines Steuergeräts (33) des Fahrzeugs angesteuert wird, und wobei wenigstens eine Antriebskomponente des Fahrzeugs (1) zum Einhalten der ermittelten optimalen Fahrstrategie selbsttätig mittels eines Steuergeräts (33) des Fahrzeugs (1) angesteuert wird, wobei vorgesehen ist, dass die wenigstens eine Antriebskomponente durch eine Brennkraftmaschine (39) des Fahrzeugs (1) und/oder durch ein Fahrzeuggetriebe (41) und/oder durch eine Elektromaschine des Fahrzeugs (1) gebildet ist, **dadurch gekennzeichnet,**
**dass** die optimale Fahrstrategie anhand von in der fahrzeugseitigen Speichereinrichtung (37) gespeicherten Erfahrungsdaten zur Durchfahrt wenigstens einer Kurve, insbesondere der erfassten Kurve und/oder wenigstens einer Kurve mit einem identischen oder ähnlichen Kurvenverlauf, mit dem Fahrzeug (1) als Kurveninformationen mittels der fahrzeugseitigen, insbesondere durch ein Steuergerät des Fahrzeugs gebildeten, Fahrstrategie-Ermittlungseinrichtung (33) ermittelbar ist.

10. Fahrzeug umfassend eine Fahrstrategie-Ermittlungseinrichtung und eine Speichereinrichtung, wobei das Fahrzeug ausgelegt ist zur Durchführung eines Verfahrens nach einem der Ansprüche 1 bis 8.

## Claims

1. Method for operating a vehicle, wherein the vehicle (1) has a trip information determination device (25) that is used to continuously determine at least the current position of the moving vehicle (1) as current trip information,
wherein a driving strategy determination device (33; 57) is provided and is initially used to detect whether there is a bend (11) ahead of the vehicle (1) in the direction of travel on the basis of the trip information and on the basis of map data stored in a storage device (37; 59)
wherein, if a bend (11) is detected by means of the driving strategy determination device (33; 57), the driving strategy determination device (33; 57) is used to determine an optimum driving strategy for driving through the bend (11) on the basis of stored and/or determined bend information and on the basis of vehicle information, wherein, in order to comply with the determined driving strategy, at least one vehicle component (39, 41, 43) of the vehicle is controlled by means of a control unit (33) of the vehicle, and wherein, in order to comply with the determined optimum driving strategy, at least one drive component of the vehicle (1) is automatically controlled by means of a control unit (33) of the vehicle (1), wherein provision is made for the at least one drive component to be formed by an internal combustion engine (39) of the vehicle (1) and/or by a vehicle transmission (41) and/or by an electric machine of the vehicle (1),
**characterized**
**in that** the optimum driving strategy is determined on the basis of experience data, stored in the on-board storage device (37), for driving through at least one bend, in particular the detected bend and/or at least one bend with an identical or similar bend profile, with the vehicle (1) as bend information by means of the on-board driving strategy determination device (33), in particular the driving strategy determination device formed by a control unit of the vehicle.

2. Method according to Claim 1, **characterized in that**, while driving through the detected bend (11), current vehicle state data are determined by means of a state determination device (27) of the vehicle (1), and **in that** the determined current vehicle state data are stored as experience data in the on-board storage device (37).

3. Method according to Claim 2, **characterized in that** the vehicle state data are formed by the speed profile of the vehicle (1) and/or by the at least one selected gear of a vehicle transmission (41) and/or by the acceleration profile of the vehicle (1) and/or by the energy consumption of the vehicle (1), in particular by the fuel consumption of the vehicle (1), when driving through the bend.

4. Method according to one of the preceding claims, **characterized in that**, in order to comply with the determined optimum driving strategy, at least one braking system of the vehicle (1) is automatically controlled by means of a control unit (33) of the vehicle (1), wherein provision is preferably made for the at least one braking system to be formed by a regenerative braking system (43) of the vehicle (1).

5. Method according to one of the preceding claims, **characterized in that** the vehicle (1) has an actuation device (46), in particular a button and/or a switch, that can be actuated by a driver of the vehicle and can be used to deactivate, in particular deactivate and activate, the automatic control of the at least one drive component and/or of the at least one braking system.

6. Method according to one of the preceding claims, **characterized in that** the determined optimum driving strategy is displayed to a driver of the vehicle (1) by means of a display device (45), in particular with a screen.

7. Method according to one of the preceding claims, **characterized in that** the vehicle information is formed by current vehicle state data that are determined by means of a state determination device (27) of the vehicle, wherein provision is preferably made for the determined current vehicle state data to be formed by the current speed of the vehicle (1) and/or the currently selected gear of a vehicle transmission (41) and/or by the amount of electrical energy currently stored by means of an energy storage device of the vehicle (1) and/or by the amount of fuel stored in a fuel tank of the vehicle (1).

8. Method according to one of the preceding claims, **characterized in that** the vehicle information is formed by the type of vehicle and/or by the current loading state of the vehicle (1) and/or by the motorization of the vehicle (1).

9. Apparatus for operating a vehicle for carrying out a method according to one of the preceding claims, wherein the vehicle (1) has a trip information determination device (25) that can be used to continuously determine at least the current position of the moving vehicle (1) as current trip information,
wherein a driving strategy determination device (33; 57) is provided and can be used to detect whether there is a bend (11) ahead of the vehicle (1)in the direction of travel on the basis of the trip information and on the basis of map data stored in a storage device (37; 59),
wherein, if a bend (11) is detected by means of the driving strategy determination device (33; 57), the driving strategy determination device (33; 57) can be used to determine an optimum driving strategy for driving through the bend (11) on the basis of stored and/or determined bend information and on the basis of vehicle information, and wherein, in order to comply with the determined driving strategy, at least one vehicle component (39, 41, 43) of the vehicle is controlled by means of a control unit (33) of the vehicle, and wherein, in order to comply with the determined optimum driving strategy, at least one drive component of the vehicle (1) is automatically controlled by means of a control unit (33) of the vehicle (1), wherein provision is made for the at least one drive component to be formed by an internal combustion engine (39) of the vehicle (1) and/or by a vehicle transmission (41) and/or by an electric machine of the vehicle (1),
**characterized**
**in that** the optimum driving strategy can be determined on the basis of experience data, stored in the on-board storage device (37), for driving through at least one bend, in particular the detected bend and/or at least one bend with an identical or similar bend profile, with the vehicle (1) as bend information by means of the on-board driving strategy determination device (33), in particular the driving strategy determination device formed by a control unit of the vehicle.

10. Vehicle comprising a driving strategy determination device and a storage device, wherein the vehicle is designed to carry out a method according to one of Claims 1 to 8.

## Revendications

1. Procédé permettant de faire fonctionner un véhicule, dans lequel le véhicule (1) présente un dispositif de détermination d'informations de trajet (25) au moyen duquel au moins la position actuelle du véhicule (1) en mouvement est déterminée en continu comme une information de trajet actuelle,
dans lequel un dispositif de détermination de stratégie de conduite (33 ; 57) est prévu au moyen duquel il est détecté d'abord à l'aide des informations de trajet et à l'aide de données cartographiques stockées dans un dispositif de stockage (37 ; 59) si un virage (11) se trouve devant le véhicule (1) dans le sens de la marche,
dans lequel, dans la mesure où le dispositif de détermination de stratégie de conduite (33 ; 57) détecte un virage (11), il est déterminé au moyen du dispositif de détermination de stratégie de conduite (33 ; 57) à l'aide d'informations de virage stockées et/ou déterminées ainsi qu'à l'aide d'informations de véhicule une stratégie de conduite optimale pour passer le virage (11), dans lequel au moins un composant de véhicule (39, 41, 43) du véhicule est piloté au moyen d'un appareil de commande (33) du véhicule pour respecter la stratégie de conduite déterminée, et dans lequel au moins un composant d'entraînement du véhicule (1) est piloté automatiquement au moyen d'un appareil de commande (33) du véhicule (1) pour respecter la stratégie de conduite optimale déterminée, dans lequel il est prévu que ledit au moins un composant d'entraînement soit formé par un moteur à combustion interne (39) du véhicule (1) et/ou par une transmission de véhicule (41) et/ou par une machine électrique du véhicule (1),
**caractérisé en ce que** la stratégie de conduite optimale est déterminée à l'aide de données empiriques stockées dans le dispositif de stockage (37) côté véhicule pour le passage d'au moins un virage, en particulier du virage détecté et/ou d'un virage ayant un tracé de virage identique ou similaire, avec le véhicule (1) en tant qu'informations de virage au moyen du dispositif de détermination de stratégie de conduite (33) côté véhicule, en particulier formé par un appareil de commande du véhicule.

2. Procédé selon la revendication 1, **caractérisé en ce que** pendant le passage du virage (11) détecté, des données d'état du véhicule actuelles sont déterminées au moyen d'un dispositif de détermination d'état (27) du véhicule (1), et **en ce que** les données d'état du véhicule actuelles déterminées sont stockées en tant que données empiriques dans le dispositif de stockage (37) côté véhicule.

3. Procédé selon la revendication 2, **caractérisé en ce que** les données d'état du véhicule sont formées par la courbe de vitesse du véhicule (1) et/ou par ledit au moins un rapport sélectionné d'une transmission de véhicule (41) et/ou par la courbe d'accélération du véhicule (1) et/ou par la consommation d'énergie du véhicule (1), en particulier par la consommation de carburant du véhicule (1), pendant le passage d'un virage.

4. Procédé selon l'une quelconque des revendications précédentes, **caractérisé en ce qu'**au moins un système de freinage du véhicule (1) est piloté automatiquement au moyen d'un appareil de commande (33) du véhicule (1) pour respecter la stratégie de conduite optimale déterminée, dans lequel il est prévu de préférence que ledit au moins un système de freinage soit formé par un système de freinage à récupération (43) du véhicule (1).

5. Procédé selon l'une quelconque des revendications précédentes, **caractérisé en ce que** le véhicule (1) présente un dispositif d'actionnement (46) pouvant être actionné par un conducteur du véhicule, en particulier un bouton et/ou un commutateur, au moyen duquel le pilotage automatique dudit au moins un composant d'entraînement et/ou dudit au moins un système de freinage peut être désactivé, pouvant en particulier être désactivé et activé.

6. Procédé selon l'une quelconque des revendications précédentes, **caractérisé en ce que** la stratégie de conduite optimale déterminée est affichée pour un conducteur du véhicule (1) au moyen d'un dispositif d'affichage (45), en particulier par un écran.

7. Procédé selon l'une quelconque des revendications précédentes, **caractérisé en ce que** les informations de véhicule sont formées par des données d'état du véhicule actuelles qui sont déterminées au moyen d'un dispositif de détermination d'état (27) du véhicule, dans lequel il est prévu de préférence que les données d'état du véhicule actuelles déterminées soient formées par la vitesse actuelle du véhicule (1) et/ou le rapport sélectionné actuellement d'une transmission de véhicule (41) et/ou par la quantité d'énergie électrique accumulée actuellement au moyen d'un dispositif d'accumulation d'énergie du véhicule (1) et/ou par la quantité de carburant stockée dans un réservoir de carburant du véhicule (1).

8. Procédé selon l'une quelconque des revendications précédentes, **caractérisé en ce que** les informations de véhicule sont formées par le type de véhicule et/ou par l'état de chargement actuel du véhicule (1) et/ou par la motorisation du véhicule (1).

9. Dispositif permettant de faire fonctionner un véhicule pour l'exécution d'un procédé selon l'une quelconque des revendications précédentes, dans lequel le véhicule (1) présente un dispositif de détermination d'informations de trajet (25) au moyen duquel au moins la position actuelle du véhicule (1) en mouvement peut être déterminée en continu comme une information de trajet actuelle,
dans lequel un dispositif de détermination de stratégie de conduite (33 ; 57) est prévu au moyen duquel, à l'aide des informations de trajet et à l'aide de données cartographiques stockées dans un dispositif de stockage (37 ; 59), il est possible de détecter si un virage (11) se trouve devant le véhicule (1) dans le sens de la marche,
dans lequel, dans la mesure où le dispositif de détermination de stratégie de conduite (33 ; 57) détecte un virage (11), le dispositif de détermination de stratégie de conduite (33 ; 57) permet de déterminer, à l'aide d'informations de virage stockées et/ou déterminées ainsi qu'à l'aide d'informations de véhicule, une stratégie de conduite optimale pour le passage du virage (11), dans lequel au moins un composant de véhicule (39, 41, 43) du véhicule est piloté au moyen d'un appareil de commande (33) du véhicule pour respecter la stratégie de conduite déterminée, et dans lequel au moins un composant d'entraînement du véhicule (1) est piloté automatiquement au moyen d'un appareil de commande (33) du véhicule (1) pour respecter la stratégie de conduite optimale déterminée, dans lequel il est prévu que ledit au moins un composant d'entraînement soit formé par un moteur à combustion interne (39) du véhicule (1) et/ou par une transmission de véhicule (41) et/ou par une machine électrique du véhicule (1),
**caractérisé en ce que** la stratégie de conduite optimale peut être déterminée à l'aide de données empiriques stockées dans le dispositif de stockage (37) côté véhicule pour le passage d'au moins un virage, en particulier du virage détecté, et/ou d'un virage ayant un tracé de virage identique ou similaire, avec le véhicule (1) en tant qu'informations de virage au moyen du dispositif de détermination de stratégie de conduite (33), en particulier formé par un appareil de commande du véhicule.

10. Véhicule, comprenant un dispositif de détermination de stratégie de conduite et un dispositif de stockage, le véhicule étant conçu pour exécuter un procédé selon l'une quelconque des revendications 1 à 8.
